(19) Europäisches Patentamt
European Patent Office
Office européen des brevets

(11) **EP 4 733 423 A1**

(12) **EUROPEAN PATENT APPLICATION**
published in accordance with Art. 153(4) EPC

(43) Date of publication:
**29.04.2026 Bulletin 2026/18**

(51) International Patent Classification (IPC):
*C22B 3/14* (2006.01)    *C22B 23/00* (2006.01)

(21) Application number: 24825908.7

(22) Date of filing: **18.06.2024**

(52) Cooperative Patent Classification (CPC):
Y02P 10/20

(86) International application number:
**PCT/JP2024/022138**

(87) International publication number:
**WO 2024/262507 (26.12.2024 Gazette 2024/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.06.2023 JP 2023102877**

(71) Applicant: SUMITOMO METAL MINING CO., LTD.
Tokyo
105-8716 (JP)

(72) Inventors:
• **SENBA Yusuke**
**Niihama-shi, Ehime 792-0002 (JP)**
• **TAKANO Masatoshi**
**Niihama-shi, Ehime 792-0002 (JP)**
• **ITOU Kenya**
**Niihama-shi, Ehime 792-0002 (JP)**
• **ASANO Satoshi**
**Niihama-shi, Ehime 792-0002 (JP)**
• **WATANABE Hiroto**
**Niihama-shi, Ehime 792-0002 (JP)**

(74) Representative: **Watermeyer, Nicholas**
**Withers & Rogers LLP**
**2 London Bridge**
**London SE1 9RA (GB)**

(54) **METHOD FOR PRODUCING LEACHATE FROM MIXED SULFIDE CONTAINING NICKEL AND COBALT**

(57)    A method for producing a leachate containing nickel ions and cobalt ions using a raw material containing nickel and cobalt that is less expensive than metallic nickel powder is provided. The method includes mixing mixed sulfide particles containing nickel and cobalt with ammonia water containing ammonium carbonate or ammonium hydrogen carbonate to obtain a slurry. The ammonia water is prepared to preferably have an ammonium carbonate concentration or an ammonium hydrogen carbonate concentration of 0.50 mol/L or more and 4.1 mol/L or less. The method includes subjecting the slurry to leaching treatment under an oxidizing condition, preferably by blowing air or oxygen gas into the slurry. The leachate containing nickel ions and cobalt ions leached out from the mixed sulfide particles is thereby obtained.

Ni OXIDE ORES (RAW MATERIAL)

SULFURIC ACID → PREPROCESSING PROCESS → HIGH-PRESSURE ACID LEACHING PROCESS → SOLID-LIQUID SEPARATION PROCESS

NEUTRALIZER → NEUTRALIZATION PROCESS

SULFURIZING AGENT → SULFURIZATION PROCESS

Ni/Co MIXED SULFIDE (MS)

AMMONIA-CONTAINING AQUEOUS SOLUTION → LEACHING PROCESS

Ni$^{2+}$/Co$^{2+}$ CONTAINING LEACHATE

**FIG.1**

## Description

Technical Field

The present invention relates to a method for producing a leachate containing nickel ions and cobalt ions from mixed sulfide containing nickel and cobalt.

Background Art

Lithium ion secondary batteries, which are charged and discharged with lithium ions moving between positive and negative electrodes, have a high energy density and are less likely to deteriorate after repeated cycles of charging and discharging. Thus, the demand has recently been increasing for lithium ion secondary batteries across a wide range of applications, including batteries for electronic devices such as mobile phones and laptop computers, driving power supplies for electric cars, and storage batteries for smart grids. A lithium ion secondary battery has a structure including a positive electrode and a negative electrode facing each other with a separator sandwiched therebetween, and an electrolyte filled between the positive and negative electrodes. The positive electrode, a main component of the lithium ion secondary battery, uses lithium nickel oxide as an active material. Lithium nickel oxide can be produced by mixing nickel hydroxide serving as a precursor with lithium hydroxide and firing a mixture thereof.

The nickel hydroxide serving as the precursor can be generated through a neutralization reaction resulting from adding an aqueous sodium hydroxide solution to an aqueous nickel sulfate solution used as a raw material. In the neutralization reaction involving the nickel sulfate raw material, sodium sulfate (sodium sulfate decahydrate) is coproduced in equimolar amounts with nickel hydroxide, as shown in Equation 1 below, and this by-product has occasionally posed a problem. Specifically, the total amount of sodium sulfate in wastewater is regulated in some areas. In such areas, costly treatment facilities have been built to satisfy effluent standards, or the production of nickel hydroxide has been curtailed to reduce sodium sulfate discharge.

$$\text{Equation 1} \qquad NiSO_4 + 2NaOH \rightarrow Ni(OH)_2 + Na_2SO_4$$

Thus, a method for producing nickel hydroxide without generating sodium sulfate as a by-product has been proposed. For example, Patent Literature 1 proposes a technique for precipitating and recovering nickel hydroxide by introducing oxygen into an aqueous ammonia solution containing powdered metallic nickel to leach the metallic nickel into the aqueous ammonia solution, adding a seed crystal, if necessary, to the aqueous ammonia solution containing nickel and hydroxyl ions, and then vaporizing the aqueous ammonia solution under atmospheric or reduced pressure.

Citation List

Patent Literature

Patent Literature 1: Unexamined Japanese Patent Application Publication No. H10-324524

Summary of Invention

Technical Problem

Although the technique in Patent Literature 1 allows nickel hydroxide production without generating sodium sulfate as a by-product, the technique uses metallic nickel as a raw material for a precursor and is thus not economically advantageous. Specifically, metallic nickel is generally produced by leaching nickel from an intermediate material, such as matte, sulfide, or hydroxide, obtained by processing nickel ores, using acid or chlorine, for example. This is followed by separation of impurities leached with the nickel through purification, and then by electrowinning. The resulting metallic nickel is thus in plate or lump form. Thus, the metallic nickel is to be processed into powder for efficient leaching of metallic nickel with an aqueous ammonia solution.

In producing the lithium nickel oxide described above, cobalt may be added to a raw material for the precursor, as in the case of positive electrode active materials such as lithium nickel-cobalt-manganese oxide (NCM) and lithium nickel cobalt aluminum oxide (NCA), which are ternary systems in which nickel is partially substituted with cobalt or other elements. In this case, the presence of cobalt in the nickel for use as the raw material for the precursor is not problematic, and in fact, it is preferable that the nickel contains a certain amount of cobalt. However, although many of the intermediate materials used in the metallic nickel production described above contain cobalt, cobalt is separated and removed from nickel prior to electrowinning through purification such as a solvent extraction process, resulting in unnecessary separation costs. As described above, the method for producing nickel hydroxide using metallic nickel as a raw material involves many processing steps that increase costs. Accordingly, there is a demand for an alternative method for producing nickel hydroxide using an unrefined intermediate material containing various impurities, obtained by processing, for example, nickel oxide ores or scrap.

In view of the above circumstances, an objective of the present invention is to provide a method for producing a leachate containing nickel ions and cobalt ions using a raw material containing nickel and cobalt that is less expensive than metallic nickel.

Solution to Problem

To achieve the above objective, a method for producing a leachate according to the present invention includes mixing mixed sulfide particles containing nickel and cobalt with ammonia water containing ammonium carbonate or ammonium hydrogen carbonate to obtain a slurry, and subjecting the slurry to leaching treatment under an oxidizing condition to obtain a leachate containing nickel ions and cobalt ions leached out from the mixed sulfide particles.

Advantageous Effects of Invention

The present invention enables the production of a leachate containing nickel ions and cobalt ions using a raw material containing nickel and cobalt that is less expensive than metallic nickel, without generating sodium sulfate as a by-product.

Brief Description of Drawings

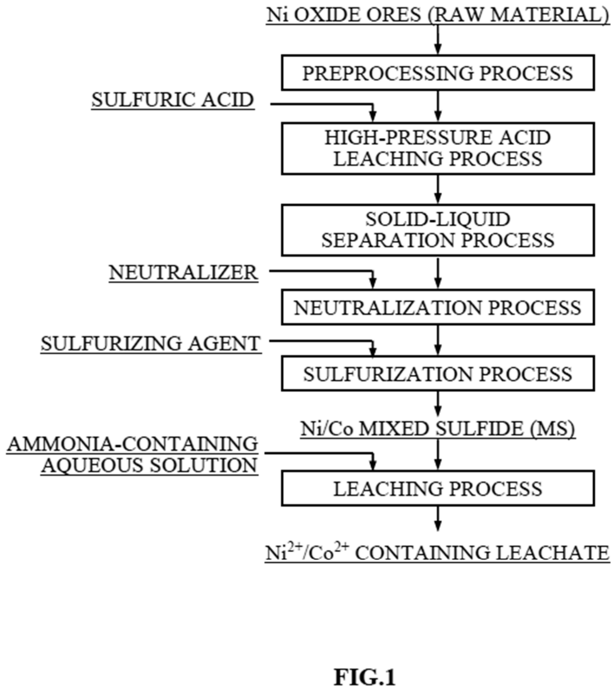

FIG. 1 is a block flow diagram illustrating a method for producing a leachate according to the present invention, together with a method for producing mixed sulfide (MS) used as a raw material for the leachate.

Description of Embodiments

A method for producing a leachate containing nickel ions and cobalt ions according to an embodiment of the present invention is described below. The method for producing a leachate according to the embodiment of the present invention uses, as a raw material, mixed sulfide containing nickel and cobalt. The mixed sulfide containing nickel and cobalt can be generated with a high pressure acid leach (HPAL) method in which acid leaching is performed by adding sulfuric acid to, for example, nickel oxide ores under high temperature and pressure.

The HPAL method includes, as illustrated in, for example, FIG. 1, a preprocessing process of preparing an ore slurry by adding water to nickel oxide ores, a high-pressure acid leaching process of charging a high-pressure leaching reactor referred to as an autoclave with the obtained ore slurry and sulfuric acid, subjecting the ore slurry to leaching treatment under high temperature and pressure, or specifically, at a temperature of about 220 to 250 °C and at a pressure of about 3.5 to 4.5 MPaG by blowing high pressure steam so as to leach out nickel and cobalt contained in the nickel oxide ores, a solid-liquid separation process of performing solid-liquid separation of an acid leachate containing the nickel and the cobalt obtained in the high-pressure acid leaching process from a leach residue, a neutralization process of neutralizing the acid leachate at a pH of about 3 to 4 by adding a neutralizer to the acid leachate so as to separate and remove impurity elements such as iron contained in the acid leachate, and a sulfurization process of adding a sulfurizing agent such as a hydrogen sulfide gas to the acid leachate from which the impurity elements have been removed so as to generate nickel/cobalt mixed sulfide (also referred to as MS).

The method for producing a leachate according to the embodiment of the present invention includes a leaching process, in which nickel/cobalt mixed sulfide particles obtained with the HPAL method described above are mixed with ammonia water containing ammonium carbonate or ammonium hydrogen carbonate to obtain a slurry, and the obtained slurry is subjected to leaching treatment under an oxidizing condition. With this method, a leachate ($Ni^{2+}/Co^{2+}$ containing leachate) containing nickel ions ($Ni^{2+}$) and cobalt ions ($Co^{2+}$) leached out from the mixed sulfide particles is produced.

Specifically, a container equipped with a stirrer is charged with water, and ammonia water ($NH_4OH$) and ammonium carbonate ($(NH_4)_2CO_3$) are added to the container to prepare an ammonia-containing aqueous solution. The ammonia-containing aqueous solution may be alternatively prepared by adding ammonium hydrogen carbonate ($NH_4HCO_3$) in place of ammonium carbonate. Then, the nickel/cobalt mixed sulfide particles are put into the container containing the ammonia-containing aqueous solution prepared as described above, and the aqueous solution and the particles are stirred and mixed with the stirrer to prepare a slurry with a homogeneous concentration. The slurry in this state is blown with air or oxygen gas to provide an oxidizing condition so as to perform leaching treatment. In this manner, nickel ions and cobalt ions can be leached out from the nickel/cobalt mixed sulfide particles.

In the leaching treatment described above, the temperature of the slurry is maintained preferably within a temperature condition of 20 °C or above and 60 °C or below to facilitate the leach reaction. The slurry temperature below 20 °C may decrease reaction velocity and thus lower production efficiency. In contrast, the slurry temperature above 60 °C facilitates thermal decomposition of ammonium carbonate, which may also lower production efficiency. When the slurry temperature is 0 °C or below, water freezes, which may also cause difficulty in favorable leaching.

In the leaching treatment described above, when ammonium carbonate is added to prepare the ammonia-containing aqueous solution, the ammonia-containing aqueous solution preferably has an ammonium carbonate concentration of 0.50 mol/L or more and 4.1 mol/L or less, more preferably 1.5 mol/L or more and 3.5 mol/L or less, or most preferably 2.0 mol/L or more and 3.0 mol/L or less. The leaching ratio may be lower when the ammonium carbonate concentration is less than 1.5 mol/L. Particularly, the ammonium carbonate concentration of less than 0.50 mol/L may not produce intended effects of the present invention. In contrast, when the ammonium carbonate concentration is increased and exceeds about 3.5 mol/L, the leaching ratio does not change much, but the cost for neutralization increases, which is undesirable. Further, the ammonium carbonate concentration exceeding 4.1 mol/L causes the ammonium carbonate to supersaturate and deposit, which may adversely affect leaching treatment. The ammonium carbonate concentration can be measured with a method such as absorptiometry or ion chromatography. When the ammonium carbonate concentration of the ammonia-containing aqueous solution falls outside the ranges described above, the ammonium carbonate concentration can be adjusted with the amount of ammonium carbonate added.

When ammonium hydrogen carbonate is added in place of ammonium carbonate to prepare the ammonia-containing aqueous solution for the leaching treatment described above, the ammonia-containing aqueous solution preferably has an ammonium hydrogen carbonate concentration of 0.50 mol/L or more and 4.1 mol/L or less, more preferably 1.5 mol/L or more and 3.5 mol/L or less, or most preferably 2.0 mol/L or more and 3.0 mol/L or less, in the same manner as described above.

In the leaching treatment described above, the free ammonia concentration in the slurry is preferably in the range of 0.10 to 1.3 mol/L. With the free ammonia concentration in this range, nickel or cobalt can be stably leached out in forms of amine complexes. The free ammonia concentration exceeding 1.3 mol/L has little effect on stable leaching in forms of the amine complexes, but it rather increases the cost and also increases the load on wastewater treatment, which is undesirable. Free ammonia is molecular ammonia ($NH_3$), and its concentration can be measured with an absorptiometric method after the free ammonia is separated with a distillation method and converted to the form of $NH_4^+$. When the free ammonia concentration falls outside the range described above, the free ammonia concentration can be adjusted with the amount of ammonia water added.

With the method for producing a leachate according to the embodiment of the present invention, a leachate containing nickel and cobalt can be produced as described above from a raw material of nickel/cobalt mixed sulfide particles without generating sodium sulfate as a by-product. The leachate can thus be produced inexpensively as compared with a method using expensive metallic nickel as a raw material. The present invention is hereinbelow described in more detail with examples. However, the present invention is not limited to the examples below.

Examples

Example 1

A container was charged with 185 mL of pure water and 15 mL of ammonia water with a concentration of 25% by mass. An aqueous solution containing 28.82 g of ammonium carbonate (($NH_4$)$_2CO_3$) was further added to the container to prepare an ammonia-containing aqueous solution with an ammonium carbonate concentration of 1.5 mol/L. The obtained ammonia-containing aqueous solution was mixed with 18 g of powdered nickel/cobalt mixed sulfide (MS) having the composition shown in Table 1 below to prepare a slurry. The slurry was subjected to leaching treatment while being stirred by the stirrer and maintained at a liquid temperature of 50 °C for 2 hours with oxygen gas from an oxygen cylinder being blown thereinto at a flow rate of 1 L/min.

Table 1

|  | Ni | Co | Mn | Fe | Mg | Si | Zn | Ca | Cu | Al | S |
|---|---|---|---|---|---|---|---|---|---|---|---|
| Composition (mass%) | 58 | 4.7 | 0.002 | 0.25 | 0.007 | <0.001 | 0.011 | <0.001 | 0.001 | 0.004 | 35 |

After the leaching treatment, solid-liquid separation was performed with filtration. The obtained leach residue was 15.2 g in dry mass, and the obtained leachate was 205 mL. The element concentrations of the leach residue and the leachate were measured with an inductively coupled plasma atomic emission spectroscopy (ICP-AES) method, and the leaching ratios for respective elements were determined using Equation 2 below.

Leaching ratio of element $\alpha$ = Mass of element $\alpha$ in leachate/(Mass of element $\alpha$ in leachate + Mass of element $\alpha$ in leach residue) $\times$ 100      Equation 2

The resultant leaching ratios were 18.3% for nickel and 7.2% for cobalt, and the leachate including an aqueous ammonia solution containing a large amount of nickel ions and cobalt ions was produced.

Example 2

The leaching treatment of MS and subsequent solid-liquid separation were performed in the same manner as in Example 1, except that the amount of ammonium carbonate $((NH_4)_2CO_3)$ added was changed from 28.82 g to 57.65 g to prepare an ammonia-containing aqueous solution with an ammonium carbonate concentration of 3.0 mol/L. The obtained leach residue was 9.80 g in dry mass, and the obtained leachate was 238 mL. The element concentrations of the obtained leach residue and the leachate were measured in the same manner as in Example 1, the leaching ratios were 44.7% for nickel and 24.5% for cobalt. The leachate composed of an aqueous ammonia solution containing a large amount of nickel ions and cobalt ions was produced.

Example 3

The leaching treatment of MS and subsequent solid-liquid separation were performed in the same manner as in Example 1, except that the amount of ammonium carbonate $((NH_4)_2CO_3)$ added was changed from 28.82 g to 115.30 g to prepare an ammonia-containing aqueous solution with an ammonium carbonate concentration of 4.1 mol/L. The obtained leach residue was 7.84 g in dry mass, and the obtained leachate was 200 mL. The element concentrations of the obtained leach residue and the leachate were measured in the same manner as in Example 1, and the leaching ratios were 45.1% for nickel and 39.4% for cobalt. The leachate including an aqueous ammonia solution containing a large amount of nickel ions and cobalt ions was produced.

Example 4

The leaching treatment of MS and subsequent solid-liquid separation were performed in the same manner as in Example 2, except that the liquid temperature in the leaching treatment was changed from 50 °C to 20 °C. The obtained leach residue was 12.6 g in dry mass, and the obtained leachate was 220 mL. The element concentrations of the obtained leach residue and the leachate were measured in the same manner as in Example 1. The leaching ratios were 27.7% for nickel and 21.6% for cobalt. The leachate including an aqueous ammonia solution containing a large amount of nickel ions and cobalt ions was produced.

Example 5

The processing was performed in the same manner as in Example 1, except that ammonium carbonate used in leaching treatment in Example 1 was changed to ammonium hydrogen carbonate. The result revealed that the obtained leachate was substantially equivalent to the leachate in Example 1 and included an aqueous ammonia solution containing a large amount of nickel ions and cobalt ions.

Comparative Example 1

The leaching treatment of MS and subsequent solid-liquid separation were performed in the same manner as in Example 1, except that the ammonia-containing aqueous solution containing ammonium carbonate used in the leachate was changed to 200 mL of ammonia water with a concentration of 25%. The obtained leachate was 200 mL. The element concentration of the leachate was measured in the same manner as in Example 1, and the leaching ratios for respective elements were determined. The resultant leaching ratios were 14.6% for nickel and 0.2% for cobalt. Compared with Examples 1 to 3 including leaching treatment at the same temperature, nickel ions were not sufficiently leached and almost no cobalt ions were leached. In Comparative Example 1, the leaching ratios for respective elements were determined using Equation 3 below.

Leaching ratio of element $\alpha$ = Mass of element $\alpha$ in leachate/Mass of element $\alpha$ in MS $\times$ 100      Equation 3

Comparative Example 2

The leaching treatment of MS and subsequent solid-liquid separation and concentration measurement were performed in the same manner as in Comparative Example 1, except that the liquid temperature in leaching treatment was changed from 50 °C to 20 °C. The resultant leaching ratios were 14.6% for nickel and 0.2% for cobalt. Compared with Example 4 including leaching treatment at the same temperature, nickel ions were not sufficiently leached and almost no cobalt ions were leached. The leaching ratios were calculated in the same manner as in Comparative Example 1. The measurement results of Examples 1 to 4 and Comparative Examples 1 and 2 are collectively shown in Table 2 below.

Table 2

| | | | | Ni | Co | Mn | Fe | Mg | Si | Zn | Ca | Cu | Al | S |
|---|---|---|---|---|---|---|---|---|---|---|---|---|---|---|
| Example 1 (50°C) | Element concentration | Leachate | g/L | 8.8 | 0.33 | <0.001 | <0.001 | <0.001 | <0.001 | <0.001 | <0.001 | <0.001 | <0.001 | 9.2 |
| | | Leach residue | mass% | 53 | 5.7 | <0.05 | 0.66 | <0.05 | <0.05 | <0.05 | <0.05 | <0.05 | <0.05 | 26 |
| | Leaching ratio | | % | 18.3 | 7.2 | - | 0 | - | - | - | - | - | - | 32.3 |
| Example 2 (50°C) | Element concentration | Leachate | g/L | 18 | 0.92 | <0.001 | <0.001 | <0.001 | <0.001 | 0.006 | <0.001 | <0.001 | <0.001 | 20 |
| | | Leach residue | mass% | 54 | 6.9 | <0.05 | 0.91 | <0.05 | <0.05 | <0.05 | <0.05 | <0.05 | <0.05 | 30 |
| | Leaching ratio | | % | 44.7 | 24.5 | - | 0 | - | - | 100 | - | - | - | 61.8 |
| Example 3 (50°C) | Element concentration | Leachate | g/L | 19 | 1.3 | <0.001 | 0.039 | 0.005 | 0.002 | 0.003 | <0.001 | <0.001 | <0.001 | 9.8 |
| | | Leach residue | mass% | 59 | 5.1 | <0.05 | 0.53 | <0.05 | <0.05 | <0.05 | <0.05 | <0.05 | <0.05 | 36 |
| | Leaching ratio | | % | 45.1 | 39.4 | - | 15.8 | 100 | 100 | 100 | - | - | - | 41.0 |
| Example 4 (20°C) | Element concentration | Leachate | g/L | 13 | 0.8 | <0.001 | 0.034 | 0.005 | <0.001 | 0.002 | <0.001 | <0.001 | <0.001 | 6.3 |
| | | Leach residue | mass% | 59 | 5 | <0.05 | 0.41 | <0.05 | <0.05 | <0.05 | <0.05 | <0.05 | <0.05 | 36 |
| | Leaching ratio | | % | 27.7 | 21.6 | - | 12.6 | 100 | - | 100 | - | - | - | 23.4 |
| Comparative Example 1 (50°C) | Element concentration | Leachate | g/L | 7.6 | 0.009 | - | - | - | - | - | - | - | - | - |
| | Leaching ratio | | % | 14.6 | 0.2 | - | - | - | - | - | - | - | - | - |
| Comparative Example 2 (20°C) | Element concentration | Leachate | g/L | 7.6 | 0.009 | - | - | - | - | - | - | - | - | - |
| | Leaching ratio | | % | 14.6 | 0.2 | - | - | - | - | - | - | - | - | - |

**Claims**

1. A method for producing a leachate from mixed sulfide containing nickel and cobalt, the method comprising:

   mixing mixed sulfide particles containing nickel and cobalt with ammonia water containing ammonium carbonate or ammonium hydrogen carbonate to obtain a slurry; and
   subjecting the slurry to leaching treatment under an oxidizing condition to obtain a leachate containing nickel ions and cobalt ions leached out from the mixed sulfide particles.

2. The method according to claim 1, wherein
   the subjecting of the slurry to leaching treatment includes blowing air or oxygen gas into the slurry.

3. The method according to claim 1, wherein
   the ammonia water containing the ammonium carbonate or the ammonium hydrogen carbonate is prepared to have an ammonium carbonate concentration or an ammonium hydrogen carbonate concentration of 0.50 mol/L or more and 4.1 mol/L or less.

Ni OXIDE ORES (RAW MATERIAL)

↓

PREPROCESSING PROCESS

SULFURIC ACID ———→

↓

HIGH-PRESSURE ACID
LEACHING PROCESS

↓

SOLID-LIQUID
SEPARATION PROCESS

NEUTRALIZER ———→

↓

NEUTRALIZATION PROCESS

SULFURIZING AGENT ———→

↓

SULFURIZATION PROCESS

↓

Ni/Co MIXED SULFIDE (MS)

AMMONIA-CONTAINING
AQUEOUS SOLUTION ———→

↓

LEACHING PROCESS

↓

$Ni^{2+}/Co^{2+}$ CONTAINING LEACHATE

**FIG.1**

## INTERNATIONAL SEARCH REPORT

| International application No. |
| --- |
| **PCT/JP2024/022138** |

| | |
| --- | --- |
| **A.** | **CLASSIFICATION OF SUBJECT MATTER** |

*C22B 3/14*(2006.01)i; *C22B 23/00*(2006.01)i
FI:   C22B3/14; C22B23/00 102

According to International Patent Classification (IPC) or to both national classification and IPC

| | |
| --- | --- |
| **B.** | **FIELDS SEARCHED** |

Minimum documentation searched (classification system followed by classification symbols)

C22B3/14; C22B23/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | JP 56-93838 A (MITSUBISHI METAL CORP.) 29 July 1981 (1981-07-29)<br>p. 6, upper right column, lines 5-9, p. 7, upper right column, lines 11-17, p. 9, upper left column, line 19 to upper right column, line 7 | 1-3 |
| A | JP 50-131671 A (SUMITOMO METAL MINING CO., LTD.) 17 October 1975 (1975-10-17)<br>p. 1, lower right column, line 11 to p. 2, upper right column, line 1 | 1-3 |

| ☐ Further documents are listed in the continuation of Box C. | ☑ See patent family annex. |
| --- | --- |

| | | |
| --- | --- | --- |
| * | Special categories of cited documents: | |
| "A" | document defining the general state of the art which is not considered to be of particular relevance | |
| "D" | document cited by the applicant in the international application | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T"  later document published after the international filing date or priority date and not in conflict with the application but cited to understand the principle or theory underlying the invention
"X"  document of particular relevance; the claimed invention cannot be considered novel or cannot be considered to involve an inventive step when the document is taken alone
"Y"  document of particular relevance; the claimed invention cannot be considered to involve an inventive step when the document is combined with one or more other such documents, such combination being obvious to a person skilled in the art
"&"  document member of the same patent family

| Date of the actual completion of the international search | Date of mailing of the international search report |
| --- | --- |
| **22 August 2024** | **03 September 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/022138**

| Patent document cited in search report | | | Publication date (day/month/year) | Patent family member(s) | Publication date (day/month/year) |
|---|---|---|---|---|---|
| JP | 56-93838 | A | 29 July 1981 | (Family: none) | |
| JP | 50-131671 | A | 17 October 1975 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10324524 B